# EUROPÄISCHE PATENTANMELDUNG

(11) **EP 3 786 465 A1**
(43) Veröffentlichungstag der Anmeldung: **03.03.2021**
(21) Anmeldenummer: 20185483.3
(22) Anmeldetag: 13.07.2020
(51) Int. Cl.: F16B 25/00, F16B 33/00

(54) **SCHRAUBE**

(30) Priorität: 28.08.2019 DE 102019123017
(71) Anmelder: fischerwerke GmbH & Co. KG, 72178 Waldachtal (DE)
(72) Erfinder: Renz, Jürgen, 72202 Nagold (DE)
(74) Vertreter: Suchy, Ulrich Johannes

(57) **Zusammenfassung**

Die Erfindung schlägt vor, eine Schraube (1) für einen Dämmstoffdübel mit einem aus Blech gestanzten, streifenförmigen Metallkern (6) auszubilden, der mit einem Kunststoffmantel (7) umspritzt ist. Der Kunststoffmantel (7) weist einen Schraubenkopf (4) mit einem Werkzeugsitz (11) auf. Der Metallkern (6) weist eine rechteckige Ausnehmung (12) auf, die den Werkzeugsitz (7) an einem Grund und an zwei gegenüberliegenden Umfangsstellen umschließt und aussteift, wodurch eine hohe Drehmomentübertragung möglich ist. Der Metallkern (6) gibt der Schraube (1) eine hohe mechanische Festigkeit und der Kunststoffmantel (6) bildet eine thermische Isolierung.

## Beschreibung

Die Erfindung betrifft eine Schraube mit den Merkmalen des Oberbegriffs des Anspruchs 1. Die Schraube ist zu einer Verankerung eines Dämmstoffdübels in einem beispielsweise gebohrten Ankerloch in einem Ankergrund, beispielsweise in Mauerwerk oder Beton, vorgesehen. Dämmstoffdübel dienen zur Befestigung von Dämmstoffplatten oder Dämmstoffmatten an Wänden von Bauwerken. Sie weisen einen Spreizdübel auf, an den sich einstückig ein rohrförmiger Hohlschaft anschließt, der einen lochscheibenförmigen Halteteller an einem dem Spreizdübel fernen Ende aufweist. Zur Verankerung ist der Spreizdübel durch Einschrauben einer Schraube aufspreizbar, die durch den Halteteller und den Hohlschaft in den Spreizdübel einführbar ist.

Die Offenlegungsschrift DE 10 2012 102 550 A1 offenbart eine Schraube für einen Dämmstoffdübel. Die Schraube weist ein Metallrohr als Schraubenschaft auf, das an beiden Enden zu Kreuzprofilen umgeformt ist. Die Kreuzprofile des den Schraubenschaft bildenden Metallrohrs sind mit Kunststoff umspritzt, wobei der Kunststoff auf dem einen Kreuzprofil ein Schraubengewinde bildet und der Kunststoff auf dem anderen Kreuzprofil einen Schraubenkopf mit einem Innenstern als Werkzeugsitz mit axialem Abstand von dem Ende des Metallrohrs aufweist.

Aufgabe der Erfindung ist, eine Schraube mit hoher mechanischer Festigkeit und guter thermischer Isolierwirkung vorzuschlagen. Insbesondere soll sich die Schraube zu einer Übertragung eines hohen Drehmoments von einem Werkzeugsitz auf das Schraubengewinde und/oder einer großen Zugkraft von einem Schraubenkopf auf das Schraubengewinde eignen.

Diese Aufgabe wird erfindungsgemäß durch die Merkmale des Anspruchs 1 gelöst. Die erfindungsgemäße Schraube weist ein Schraubengewinde und einen Schraubenkopf mit einem Werkzeugsitz auf. Der Werkzeugsitz dient zu einem durch Formschluss drehfesten Ansetzen eines Drehwerkzeugs zu einem Drehantrieb der Schraube. Der Werkzeugsitz kann beispielsweise zwei gegenüberliegende Parallelflächen oder einen Außenvierkant, Außensechskant oder allgemein Außenmehrkant zum Ansetzen eines Gabelschlüssels oder eines Ringschlüssels als Drehwerkzeug, ein Innendreikant, Innenvierkant, Innensechskant oder allgemein Innenmehrkant zum Ansetzen eines Inbusschlüssels oder einen Innenstern zum Ansetzen eines Sternschlüssels als Drehwerkzeug aufweisen. Die Aufzählung ist beispielhaft und nicht abschließend. Das Ende der Schraube mit dem Werkzeugsitz bildet den Schraubenkopf, der nicht zwingend radial über einen Schraubenschaft überstehen muss, aber vorzugsweise radial über den Schraubenschaft übersteht.

Die Schraube weist einen Metallkern auf, der mit einem Kunststoffmantel ummantelt, insbesondere mit Kunststoff umspritzt ist. Der Metallkern muss nicht über seine gesamte Länge mit Kunststoff ummantelt sein und er muss nicht bis zu einem vorderen, dem Schraubenkopf fernen Ende der Schraube reichen. An einem hinteren, den Schraubenkopf beziehungsweise den Werkzeugsitz aufweisenden Ende der Schraube reicht der Metallkern bis zu einem Umfang des Werkzeugsitzes. Der Werkzeugsitz ist zumindest teilweise von dem Kunststoffmantel gebildet, wobei der Metallkern im Bereich des Schraubenkopfes und/oder des Werkzeugsitzes vollständig von dem Kunststoff ummantelt sein kann, so dass der Metallkern im Bereich des Schraubenkopfes und/oder des Werkzeugsitzes an keiner Stelle einer Oberfläche frei liegt und der Werkzeugsitz insbesondere vollständig von dem Kunststoffmantel gebildet ist. Allerdings kann der Metallkern auch stellenweise frei liegen, beispielsweise an einer oder mehreren Umfangsstellen und/oder an einem Grund des Werkzeugsitzes und/oder an einer Stirnfläche des Schraubenkopfes. Bei einem an einem Außenumfang ausgebildeten Werkzeugsitz reicht der Metallkern der Schraube innen bis an den Umfang des Werkzeugsitzes, wobei der Metallkern von Kunststoff abgedeckt sein oder auch stellenweise frei liegen kann. Bei einem beispielsweise in einer Senkung im Schraubenkopf ausgebildeten Werkzeugsitz an einem Innenumfang reicht der Metallkern der Schraube außen bis an den Umfang des Werkzeugsitzes, wobei auch in diesem Fall der Metallkern von Kunststoff abgedeckt sein oder stellenweise frei liegen kann.

Dadurch, dass der Metallkern der erfindungsgemäßen Schraube bis an den Umfang des Werkzeugsitzes reicht, ermöglicht er eine Übertragung eines hohen Drehmoments vom Werkzeugsitz in einen Schraubenschaft und auf ein Schraubengewinde. Insbesondere wenn der Kunststoffmantel durch das Spritzgießen oder in anderer Weise stoffschlüssig oder jedenfalls schubfest mit dem Metallkern verbunden ist, ermöglicht der Metallkern zusammen mit dem Kunststoffmantel eine hohe Drehmomentübertragung. Außerdem überträgt der Metallkern eine große Zugkraft vom Schraubenkopf auf das Schraubengewinde. Es ist jedoch nicht zwingend, dass die Drehmomentübertragbarkeit und/oder Zugfestigkeit der erfindungsgemäßen Schraube so hoch oder höher als bei einer Schraube aus einem hochfesten, eventuell faserverstärkten Kunststoff ist.

Vorzugsweise bildet der Metallkern der erfindungsgemäßen Schraube eine Stütze für den Werkzeugsitz an einer Umfangsstelle des Werkzeugsitzes oder weist eine solche Stütze auf. Der Metallkern kann auch zwei Stützen an gegenüberliegenden Umfangsstellen des Werkzeugsitzes und/oder zwei oder mehr Stützen an gleichmäßig oder ungleichmäßig über den Umfang des Werkzeugsitzes verteilten Stellen des Werkzeugsitzes bilden oder aufweisen. Die Stützen versteifen den Werkzeugsitz, der an oder in dem Kunststoffmantel der erfindungsgemäßen Schraube ausgebildet ist, so dass eine höhere Kraftübertragung von einem an dem Werkzeugsitz angesetzten Drehwerkzeug auf den Werkzeugsitz der erfindungsgemäßen Schraube möglich ist. Bei einem durch Formschluss drehfest an dem Werkzeugsitz der Schraube angesetzten Drehwerkzeug wird ein Drehmoment durch Normalkräfte zwischen aneinander anliegenden Flächen des Drehwerkzeugs und des Werkzeugsitzes übertragen, das heißt, die Aussteifung des Werkzeugsitzes aus Kunststoff durch die Stützen des Metallkerns erhöht das von dem Drehwerkzeug auf den Werkzeugsitz übertragbare Drehmoment.

Eine Ausgestaltung der Erfindung sieht einen streifenförmigen Metallkern vor, der einfach von einem Blechstreifen abgetrennt oder aus Blech gestanzt sein kann. Diese Ausgestaltung der Erfindung ermöglicht eine preisgünstige Herstellung des Metallkerns.

Eine Ausgestaltung der Erfindung sieht einen als Senkung im Schraubenkopf ausgebildeten Werkzeugsitz vor. Der Werkzeugsitz weist also eine Hohlform auf beziehungsweise ist an einem Innenumfang ausgebildet. Die Senkung weist beispielsweise einen dreieckigen, viereckigen, sechseckigen oder allgemein mehreckigen oder einen sternförmigen Querschnitt auf, das heißt der Werkzeugsitz ist ein Innendreikant, Innenvierkant, Innensechskant, Innenmehrkant oder ein Innenstern. Die Aufzählung ist beispielhaft und nicht abschließend. Der Metallkern der erfindungsgemäßen Schraube weist bei dieser Ausgestaltung der Erfindung eine Ausnehmung auf, die an der Seite offen ist, an der auch der als Senkung ausgebildete Werkzeugsitz offen ist. Die Ausnehmung umgreift den in dem Kunststoffmantel ausgebildeten Werkzeugsitz an einem Grund des Werkzeugsitzes und als Stützen an insbesondere zwei gegenüberliegenden Umfangsstellen oder allgemein an mehreren Umfangsstellen. Die Ausnehmung des Metallkerns kann im Werkzeugsitz vollständig mit dem Kunststoff der Kunststoffummantelung abgedeckt sein oder an einer oder mehreren Stellen, beispielsweise am Umfang und/oder am Grund der Senkung des Werkzeugsitzes oder auch an einer Stirnfläche des Schraubenkopfes frei liegen. Eine vollständige Abdeckung verbessert die Isolierwirkung der erfindungsgemäßen Schraube, eine freiliegende Ausnehmung des Metallkerns an Umfangsstellen des Werkzeugsitzes verbessert einen Sitz eines Drehwerkzeugs.

In bevorzugter Ausgestaltung reicht der Metallkern bis in das Schraubengewinde und ist im Bereich des Schraubengewindes vorzugsweise vollständig mit dem Kunststoffmantel ummantelt. Allerdings kann der Metallkern im Bereich des Schraubengewindes auch an einer oder mehreren Stellen frei liegen, beispielsweise kann der Metallkern nach vorn, das heißt an einem dem Schraubenkopf fernen Ende aus dem Kunststoffmantel vorstehen und/oder an einem Gewindegang oder an Stellen des Gewindegangs des Schraubengewindes frei liegen.

Eine Ausgestaltung der Erfindung sieht vor, dass der Metallkern im Bereich des Schraubengewindes ein Gewinde aufweist, das von dem Kunststoffmantel vollständig oder teilweise ummantelt ist.

Eine andere Ausgestaltung der Erfindung sieht vor, dass der Metallkern im Bereich des Schraubengewindes Zähne beispielsweise nach Art von Zahnstangen an seinen Längsrändern aufweist, die insbesondere für ein eingängiges Schraubengewinde um einen halben Zahnabstand axial zueinander versetzt sind, so dass sich die Zähne an beiden Längsrändern des Metallkerns im Bereich des Schraubengewindes innerhalb eines Gewindegangs des Schraubengewindes befinden. Die Zähne des Metallkerns sind von dem Kunststoffmantel überdeckt, wobei der Kunststoffmantel die Zähne beziehungsweise den Metallkern im Bereich des Schraubengewindes zu dem Schraubengewinde ergänzt. Der im Bereich des Schraubengewindes beispielsweise streifenförmige Metallkern befindet sich beispielsweise in einer Axialebene des Schraubengewindes, wobei die Zähne an den Längsrändern des Metallkerns in einen Gewindegang des Schraubengewindes ragen und das Schraubengewinde stabilisieren. Die Zähne sind vorzugsweise mit dem Kunststoff abgedeckt, wodurch die gute thermische Isolierwirkung erreicht wird.

Die Zähne an den Längsrändern des Metallkerns im Bereich des Schraubengewindes können maßstäbliche oder nicht maßstäblich Verkleinerungen eines Achsschnitts des Gewindegangs des Schraubengewindes sein. Vorzugsweise sind die Zähne an Zahnflanken, Zahnköpfen und an Zahnfüßen beziehungsweise in Zahnzwischenräumen von dem Kunststoff abgedeckt.

Eine Ausgestaltung der Erfindung sieht vor, dass der Metallkern einen oder mehrere Durchbrüche aufweist, die beispielsweise durch Stanzen eines streifenförmigen Metallkerns aus Blech hergestellt sind. Durch die Durchbrüche ist der Kunststoffmantel auf beiden Seiten des Metallkerns einstückig verbunden. Wird beispielsweise der Metallkern mit dem Kunststoffmantel umspritzt, durchdringt der Kunststoff die Durchbrüche im Metallkern, wodurch die einstückige Verbindung des Kunststoffmantels auf beiden Seiten des Metallkerns hergestellt wird. Die Durchbrüche verbessern einen Halt des Kunststoffmantels auf dem Metallkern und wirken einem ungewollten Trennen des Kunststoffmantels in einer Axialebene, in der sich der Metallkern befindet, in zwei Hälften entgegen.

Vorzugsweise erstreckt sich der Metallkern über eine gesamte oder nahezu die gesamte Länge der Schraube von dem Werkzeugsitz an dem hinteren Ende der Schraube bis an oder nahe an das dem Schraubenkopf beziehungsweise dem Werkzeugsitz ferne vordere Ende der Schraube. Am vorderen Ende kann der Metallkern aus dem Kunststoffmantel vorstehen oder es steht der Kunststoffmantel nach vorn über den Metallkern über. Ausgestaltungen der Erfindung sehen vor, dass sich der Metallkern vom Werkzeugsitz bis in das Schraubengewinde und zumindest über mehr als eine Hälfte einer Länge des Schraubengewindes, vorzugsweise über mindestens drei Viertel der Länge des Schraubengewindes und besonders bevorzugt über mindestens 9/10 der Länge des Schraubengewindes nach vorn erstreckt.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in der Zeichnung dargestellten Ausführungsbeispiels näher erläutert. Es zeigen:
- Figur 1: einen perspektivischen Achsschnitt einer erfindungsgemäßen Schraube; und.
- Figur 2: eine Stirnansicht eines Schraubenkopfes mit einem Werkzeugsitz der Schraube aus Figur 1.

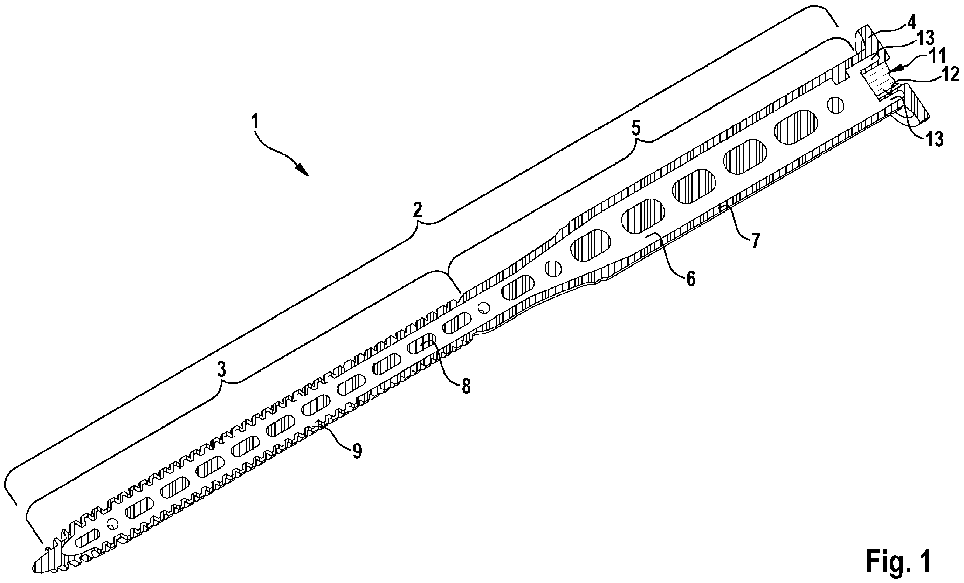

Die in Figur 1 dargestellte, erfindungsgemäße Schraube 1 weist einen zylindrischen Schraubenschaft 2 mit einem Schraubengewinde 3, einem Schraubenkopf 4 an einem dem Schraubengewinde 3 fernen Ende und einem gewindelosen Schaftabschnitt 5 zwischen dem Schraubengewinde 3 und dem Schraubenkopf 4 auf. Das Ende mit dem Schraubenkopf 4 wird hier auch als hinteres Ende der Schraube 1 bezeichnet.

Die Schraube 1 weist einen Metallkern 6 auf, der in Kunststoff eingebettet ist. Der Kunststoff bildet einen Kunststoffmantel 7, der den Metallkern 6 von vorn bis hinten umschließt. Insbesondere im Bereich des Schraubengewindes 3 deckt der Kunststoff den Metallkern 6 vollständig ab, so dass jedenfalls im Bereich des Schraubengewindes 3 kein Metall des Metallkerns 6 an einer Oberfläche des Schraubengewindes 3 frei liegt. Auch im Bereich des gewindelosen Schaftabschnitts 5 ist der Metallkern 6 im Ausführungsbeispiel der Erfindung vollständig vom Kunststoff des Kunststoffmantels 7 abgedeckt. An einem vorderen, dem Schraubenkopf 4 fernen Ende der Schraube 1 steht der Kunststoff des Kunststoffmantels 7 ein kurzes Stück in axialer Richtung über den Metallkern 6 über. Im Ausführungsbeispiel beträgt der Überstand des Kunststoffmantels 7 über den Metallkern 6 am vorderen Ende der Schraube 1 ungefähr einen Gewindedurchmesser des Schraubengewindes 3. Im Ausführungsbeispiel ist der Metallkern 6 mit dem den Kunststoffmantel 7 bildenden Kunststoff umspritzt. Die erfindungsgemäße Schraube 1 ist im Ausführungsbeispiel ein Metall-Kunststoff-Verbundteil mit dem durch den Kunststoffmantel 7 umspritzten Metallkern 6.

Der Metallkern 6 ist im Ausführungsbeispiel der Erfindung ein aus Blech gestanzter Streifen, der Durchbrüche 8 in Form von in einer Längsrichtung ausgerichteten Langlöchern und Rundlöchern in einer Längsmitte des Metallkerns 6 aufweist. Die Durchbrüche 8 sind mit dem Kunststoff ausgefüllt, der den Kunststoffmantel 7 bildet und der den Kunststoffmantel 7 auf beiden Seiten des Metallkerns 6 einstückig verbindet. Form und Anordnung der Durchbrüche 8 ist nicht zwingend für die Erfindung und es ist auch ein Metallkern 6 ohne Durchbrüche möglich (nicht dargestellt).

Im Bereich des Schraubengewindes 3 weist der Metallkern 6 Zähne 9 nach Art von Zahnstangen an seinen Längsrändern auf, die im Ausführungsbeispiel um einen halben Zahnabstand in der Längsrichtung zueinander versetzt sind, so dass sich die Zähne 9 innerhalb eines Gewindegangs 10 des Schraubengewindes 3 befinden. Auf beiden Flachseiten des streifenförmigen Metallkerns 6 weist der Kunststoffmantel 7 die Form von Zylindersegmenten mit Abschnitten des Gewindegangs 10 am Außenumfang auf, die den Metallkern 6 mit den Zähnen 9 zu dem Schraubengewinde 3 vervollständigen. Der Kunststoff des Kunststoffmantels 7 deckt auch die Zähne 9 an den beiden Längsrändern des Metallkerns 6 vollständig, das heißt an Zahnflanken, Zahnköpfen und Zahnfüßen beziehungsweise in Zahnzwischenräumen ab, so dass im Bereich des Schraubengewindes 3 wie oben geschrieben kein Metall des Metallkerns 6 an einer Oberfläche des Schraubengewindes 3 frei liegt.

Im Ausführungsbeispiel ist das Schraubengewinde 3 ein Spitzgewinde mit gerundetem Gewindekopf, das heißt der Gewindegang des Schraubengewindes 3 weist dreieckige Schnittflächen in einer Axialebene der Schraube 1 auf. Die Zähne 9 an den beiden Längsrändern des Metallkerns 6 sind ebenfalls dreiecksförmig und somit Verkleinerungen des Achsschnitts des Gewindegangs 10 des Schraubengewindes 3. Andere Gewindeformen, beispielsweise ein Sägezahngewinde, Trapezgewinde, Rechteckgewinde oder Rundgewinde und entsprechend trapezförmige, rechteckige oder wellenförmige Zähne sind möglich (nicht dargestellt). Es ist nicht zwingend, dass die Zähne 9 eine gleiche, verkleinerte Form des Achsschnitts des Gewindegangs 10 des Schraubengewindes 3 aufweisen.

Hinter einem hinteren, dem Schraubenkopf 4 zugewandten Ende des Schraubengewindes 3 erweitert sich der sich an das Schraubengewinde 3 anschließende gewindelose Schaftabschnitt 5 bis zu einem zylindrischen Abschnitt des gewindelosen Schaftabschnitts 5, der einen größten Teil einer Länge des gewindelosen Schaftabschnitts 5 einnimmt und bis zum Schraubenkopf 4 reicht. In dem durchmessergrößeren, zylindrischen Abschnitt des gewindelosen Schaftabschnitts 5 ist der streifenförmige Metallkern 6 breiter als innerhalb des Schraubengewindes 3.

Auch in dem gewindelosen Schaftabschnitt 5 ist der Metallkern 6 vollständig von dem Kunststoffmantel 7 umschlossen, so dass auch im gewindelosen Schaftabschnitt 5 der Metallkern 6 an keiner Stelle einer Oberfläche frei liegt.

Der Schraubenkopf 4 weist im Ausführungsbeispiel die Form eines ringscheibenförmigen Flansches mit einer flachen, kegelstumpfförmigen Unterseite auf, wobei diese Form nicht zwingend für den Schraubenkopf 4 ist.

Innerhalb des Schraubenkopfs 4, das heißt in dem dem Schraubengewinde 3 fernen, hinteren Ende des Schraubenschafts 2 weist die Schraube 1 einen Innenstern als Werkzeugsitz 11 zu einem durch Formschluss drehfesten Ansetzen eines Drehwerkzeugs, hier eines Sternschlüssels (nicht dargestellt), für einen Drehantrieb der Schraube 1 auf. Anstelle des Innensterns kann die Schraube 1 beispielsweise auch einen Innensechskant als Werkzeugsitz 11 zum Ansetzen eines Inbusschlüssels aufweisen (nicht dargestellt).

Der Schraubenkopf 4 mit dem Werkzeugsitz 11 ist zu großen Teilen von dem Kunststoffmantel 7 gebildet. Der Metallkern 6 erstreckt sich von dem Schraubengewinde 3 bis zu dem Werkzeugsitz 11 im Schraubenkopf 3. Im Bereich des Werkzeugsitzes 11 weist der Metallkern 6 eine rechteckige Ausnehmung 12 auf, die an der hinteren, den Schraubenkopf 4 aufweisenden Stirnseite offen ist. Die Ausnehmung 12 umschließt den Werkzeugsitz 11 an einem Grund des Werkzeugsitzes 11 und an zwei gegenüberliegenden Umfangsstellen des Werkzeugsitzes 11. An den beiden gegenüberliegenden Umfangsstellen des Werkzeugsitzes 11 sind durch die Ausnehmung 12 im Metallkern 6 zwei achsparallele Finger gebildet, die Stützen 13 für den Werkzeugsitz 11 an den beiden gegenüberliegenden Umfangsstellen des Werkzeugsitzes 11 bilden. Die beiden Stützen 13 aus dem Metall des Metallkerns 6 versteifen den Werkzeugsitz 11 im Kunststoff beziehungsweise im Kunststoffmantel 7 des Schraubenkopfes 4, so dass ein nicht dargestelltes, am beziehungsweise im Werkzeugsitz 11 angesetztes Drehwerkzeug stabiler als nur durch den Kunststoff abgestützt ist und ein höheres Drehmoment vom Drehwerkzeug auf den Werkzeugsitz 11 übertragbar ist.

Bei einem Innenstern als Werkzeugsitz 11 ist das Drehwerkzeug ein Sternschlüssel. Bei einem Innensechskant als Werkzeugsitz (nicht dargestellt) wäre das Drehwerkzeug ein Inbusschlüssel.

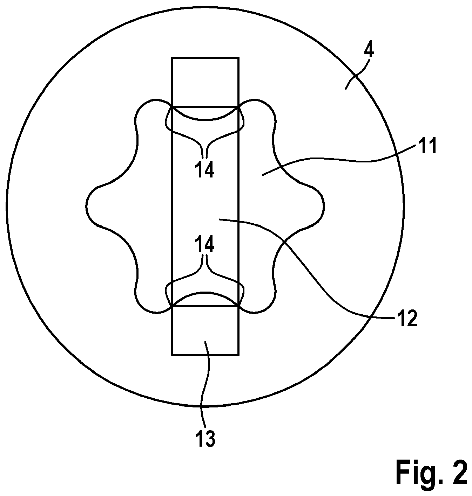

Im Bereich des Schraubenkopfes 4 und dem Werkzeugsitz 11 kann der Metallkern 6 vollständig von dem Kunststoff des Kunststoffmantels 7 umschlossen, das heißt von dem Kunststoff überdeckt sein, so dass der Metallkern 6 an keiner Oberfläche frei liegt und der Werkzeugsitz 11 vollständig vom Kunststoffmantel 7 gebildet ist. Im Ausführungsbeispiel liegt der Metallkern 6 an einem Grund des Werkzeugsitzes 11 und an den beiden gegenüberliegenden Umfangsstellen stellenweise frei, wie gut in Figur 2 zu sehen ist: Die jeweils beiden inneren Längskanten 14 der die Stützen 13 bildenden Finger des Metallkerns 6 liegen am Innenumfang des Werkzeugsitzes 11 frei. Dass die die Stützen 13 bildenden Finger des Metallkerns 6 in Figur 1 abgedeckt erscheinen, liegt daran, dass sich die Schnittebene im Bereich von gegenüberliegenden Wellenbergen des den Werkzeugsitz 11 bildenden Innensterns befindet (vergleiche Figur 2).

### Bezugszeichenliste

- 1: Schraube
- 2: Schraubenschaft
- 3: Schraubengewinde
- 4: Schraubenkopf
- 5: gewindeloser Schaftabschnitt
- 6: Metallkern
- 7: Kunststoffmantel
- 8: Durchbruch
- 9: Zahn
- 10: Gewindegang
- 11: Werkzeugsitz
- 12: Ausnehmung
- 13: Stütze
- 14: Längskante

## Patentansprüche

1. Schraube mit einem Schraubengewinde (3) und einem Schraubenkopf (4), der einen Werkzeugsitz (11) zu einem durch Formschluss drehfesten Ansetzen eines Drehwerkzeugs zu einem Drehantrieb der Schraube (1) aufweist, wobei die Schraube (1) einen Metallkern (6) aufweist, der mit einem Kunststoffmantel (7) ummantelt ist, **dadurch gekennzeichnet, dass** der Metallkern (6) bis zu einem Umfang des Werkzeugsitzes (11) reicht und dass der Werkzeugsitz (11) zumindest teilweise von dem Kunststoffmantel (7) gebildet ist.

2. Schraube nach Anspruch 1, **dadurch gekennzeichnet, dass** der Metallkern (6) mit dem Kunststoffmantel (7) umspritzt ist.

3. Schraube nach Anspruch 1 oder 2, **dadurch gekennzeichnet, dass** der Metallkern (6) eine Stütze (13) für den Werkzeugsitz (11) an einer Umgangsstelle des Werkzeugsitzes (11) aufweist.

4. Schraube nach einem oder mehreren der Ansprüche 1 bis 3, **dadurch gekennzeichnet, dass** der Metallkern (6) Stützen (13) für den Werkzeugsitz (11) an gegenüberliegenden Umfangsstellen des Werkzeugsitzes (11) aufweist.

5. Schraube nach einem oder mehreren der vorhergehenden Ansprüche, **dadurch gekennzeichnet, dass** der Metallkern (6) streifenförmig ist.

6. Schraube nach einem oder mehreren der vorhergehenden Ansprüche, **dadurch gekennzeichnet, dass** der Metallkern (6) ein Blechstanzteil ist.

7. Schraube nach einem oder mehreren der vorhergehenden Ansprüche, **dadurch gekennzeichnet, dass** der Metallkern (6) und der Kunststoffmantel (7) schubfest miteinander verbunden sind.

8. Schraube nach einem oder mehreren der vorhergehenden Ansprüche, **dadurch gekennzeichnet, dass** der Werkzeugsitz (11) als Senkung im Schraubenkopf (4) ausgebildet ist und dass der Metallkern (6) eine Ausnehmung (12) innerhalb des Schraubenkopfes (4) aufweist, die an einer offenen Seite der den Werkzeugsitz (11) bildenden Senkung offen ist und die den Werkzeugsitz (11) in dem Kunststoffmantel (7) an einem Grund des Werkzeugsitzes (11) und als Stützen (13) für den Werkzeugsitz (11) an zwei insbesondere gegenüberliegenden Umfangsstellen umgreift.

9. Schraube nach einem oder mehreren der vorhergehenden Ansprüche, **dadurch gekennzeichnet, dass** der Metallkern (6) bis in das Schraubengewinde (3) reicht und im Bereich des Schraubengewindes (3) vorzugsweise vollständig mit dem Kunststoffmantel (7) ummantelt ist.

10. Schraube nach einem oder mehreren der vorhergehenden Ansprüche, **dadurch gekennzeichnet, dass** der Metallkern (6) im Bereich des Schraubengewindes (3) ein Gewinde aufweist, das von dem Kunststoffmantel (7) ummantelt ist.

11. Schraube nach einem oder mehreren der vorhergehenden Ansprüche, **dadurch gekennzeichnet, dass** der Metallkern (6) im Bereich des Schraubengewindes (3) Zähne (9) an seinen Längsrändern aufweist, die sich innerhalb eines Gewindegangs des Schraubengewindes (3) befinden.

12. Schraube nach Anspruch 11, **dadurch gekennzeichnet, dass** die Zähne (9) an den Längsrändern des Metallkerns (6) die Form eines um eine Dicke des Kunststoffmantels (7) verkleinerten Achsschnitts des Gewindegangs des Schraubengewindes (3) aufweisen.

13. Schraube nach einem oder mehreren der vorhergehenden Ansprüche, **dadurch gekennzeichnet, dass** der Metallkern (6) einen oder mehrere Durchbrüche (8) aufweist, durch die der Kunststoffmantel (7) auf beiden Seiten des Metallkerns (6) einstückig mit Kunststoff verbunden ist.

14. Schraube nach einem oder mehreren der vorhergehenden Ansprüche, **dadurch gekennzeichnet, dass** sich der Metallkern (6) über mehr als eine Hälfte einer Länge des Schraubengewindes (3), insbesondere mindestens drei Viertel der Länge des Schraubengewindes (3) und vorzugsweise mindestens 9/10 der Länge des Schraubengewindes (3) erstreckt.
